# EUROPÄISCHE PATENTSCHRIFT

(11) **EP 0 815 267 B1**
(45) Veröffentlichungstag und Bekanntmachung des Hinweises auf die Patenterteilung: **24.03.1999**
(21) Anmeldenummer: 95940224.9
(22) Anmeldetag: 21.11.1995
(51) Int. Cl.: C21D 1/09, B23K 26/14

(54) **VERFAHREN UND VORRICHTUNG ZUR ERHÖHUNG DES ABSORPTIONSGRADES BEIM OBERFLÄCHEN-FESTPHASENHÄRTEN VON WERKSTÜCKEN MITTELS LASERSTRAHLUNG**
PROCESS AND DEVICE FOR INCREASING THE DEGREE OF ABSORPTION DURING SUPERFICIAL SOLID PHASE HARDENING OF WORKPIECES BY LASER RADIATION
PROCEDE ET DISPOSITIF D'ACCROISSEMENT DU DEGRE D'ABSORPTION LORS DE LA TREMPE SUPERFICIELLE EN PHASE SOLIDE DE PIECES PAR RAYONNEMENT LASER

(30) Priorität: 13.03.1995 DE 19508584
(43) Veröffentlichungstag der Anmeldung: 07.01.1998
(73) Patentinhaber: Fraunhofer-Gesellschaft zur Förderung der angewandten Forschung e.V., 80636 München (DE)
(72) Erfinder: WISSENBACH, Konrad, D-52134 Herzogenrath-Kohlscheid (DE); JUNG, Ralf, D-52066 Aachen (DE); KÜPPER, Franck, Belleville, MI 48111 (US); VITR, Gilbert, D-52066 Aachen (DE)
(74) Vertreter: Grimm, Ekkehard
(86) Internationale Anmeldenummer: EP9504581
(87) Internationale Veröffentlichungsnummer: WO9628574

(56) Entgegenhaltungen:
- WO-A-89/05707
- DE-A- 2 940 127
- DE-A- 4 320 408
- DE-A- 4 401 697
- LU-A- 81 852

## Beschreibung

Die vorliegende Erfindung bezieht sich auf ein Verfahren zur Erhöhung des Absorptionsgrades beim Oberflächen-Festphasenhärten von Werkstücken mittels Laserstrahlung, insbesondere von geometrisch komplizierten Werkstücken, bei dem im Bereich der Bearbeitungszone während des Bearbeitungsprozesses auf dem Werkstück Maßnahmen vorgenommen werden, die die Absorption der Laserstrahlung erhöhen.

Weiterhin bezieht sich die Erfindung auf eine Vorrichtung zur Erhöhung des Absorptionsgrades beim Oberflächen-Festphasenhärten von Werkstücken mittels Laserstrahlung, insbesondere von geometrisch komplizierten Werkstücken, mit einer Prozeßgaszuführeinrichtung.

In der Werkstoffbearbeitung, z.B. in der Oberflächenbehandlung von Bauteilen, haben sich in weiten Bereichen Laser etabliert und werden in weiten Bereichen eingesetzt. Beim Einsatz von Lasersystemen hängt das Bearbeitungsergebnis stark von derjenigen Laserleistung ab, die in das Werkstück eingekoppelt werden kann. Die einkoppelbare Leistung wiederum ist von dem Absorptionsgrad an der Werkstückoberfläche abhängig, der wiederum von verschiedenen Einflußgrößen abhängig ist.

Ein Teilgebiet der Oberflächenbehandlung von Werkstücken ist das Festphasenhärten mit Laserstrahlung. Eine derartige Härtung wird insbesondere an solchen Bereichen eines Werkstückes durchgeführt, die beispielsweise einer erhöhten Belastung oder einem starken Verschleiß unterliegen oder erhöhten Temperaturen standhalten müssen.

Mit den bisher angewandten Verfahren zur Festphasenhärtung an Eisenwerkstoffen mit CO₂- bzw. Nd-YAG-Laserstrahlung können ohne zusätzliche Maßnahmen Absorptionsgrade von 10% für die Wellenlänge λ = 10,6 µm bzw. 30% für λ = 1,06 µm erzielt werden. Eine weitere Erhöhung des Absorptionsgrades und damit des Prozeßwirkungsgrades η_{P} = P_{Abs}/P_{W}, wobei P_{Abs} die absorbierte Laserleistung und P_{W} die Laserleistung am Werkstück bezeichnen, kann nur durch zusätzliche, vorbereitende Arbeitsschritte erreicht werden. Hierzu zählen das Aufbringen von absorptionssteigernden Schichten, wie z.B. Graphit, Farbe, auf die Oberfläche. Da eine solche Oberflächenbehandlung in sehr definierten Bereichen durchgeführt werden muß, und zwar entsprechend den Anforderungen in der Industrie, müssen solche absorptionssteigernden Deckschichten sehr definiert zum einen hinsichtlich der Lage und zum anderen hinsichtlich einer konstanten Dicke und Homogenität auf der Werkstückoberfläche aufgebracht werden. Hierzu werden z.B. Spritz- oder Rollverfahren verwendet, die jedoch bei komplexen Werkstückgeometrien nur sehr schwer anwendbar sind. Es ergibt sich daher eine geringe Reproduzierbarkeit des Deckschicht-Auftrags, insbesondere in Bezug auf Schichtdicke und deren Homogenität, was wiederum zu unbefriedigenden Bearbeitungsergebnissen führt. Eine solche Reproduzierbarkeit ist aber gerade bei der Serienherstellung von Bauteilen zu fordern. Weiterhin werden durch die zusätzlichen Arbeitsschritte des Auftragens der absorptionssteigernden Deckschichten vor der Laserstrahlbehandlung und das notwendige Reinigen der Oberfläche nach der Behandlung von verbleibenden Resten solcher Deckschichten die Fertigungskosten erhöht. Zur Vermeidung von Oxidation wird nach dem Stand der Technik Stickstoff (N₂) als Schutzgas eingesetzt.

Die WO-A-8905707 sieht die Herstellung einer lokalen Sauerstoff- oder Stickstoffatmosphäre an einer mit Laser bestrahlten Metalloberfläche während der Bestrahlung vor, um die Oberfläche chemisch zu verändern, z.B. eine Oxidschicht zu bilden, und den Laser-Absorptionsgrad, z.B. für militärische Zwecke oder zur Verringerung von Wärmeabsorption, zu modifizieren bzw. zu erhöhen.

Die DE-A-2940127 bezieht sich auf das Härten mittels Laser-Bestrahlung, wobei Luft oder Inertgas zur bestrahlten Stelle zwecks Abschrecken zugeführt werden kann. Im Fall der Zufuhr von Luft dient diese auch der Bildung von die Absorption erhöhenden Oxiden. Die Luft- oder Gaszufuhr erfolgt nach der Laser-Bestrahlung.

Die Zufuhr von C zum Carburieren oder von N zum Aufsticken einer mittels Laser bestrahlten Zone von Walzstraßenrollen offenbart die LU-A-81852, wobei diese Zufuhr in Form einer oxidierenden Gasmischung, z.B. unter anderem von Sauerstoff und Stickstoff, erfolgt.

Die DE-A-4320408 offenbart ein Verfahren zur Prozeß-Kontrolle und -Regelung bei der Oberflächenbearbeitung von Werkstücken mit gepulster Laserstrahlung. Hierbei ist eine Regelung der Zufuhr von Prozeßgas unter Einsatz einer Steuereinheit vorgesehen.

Ausgehend von dem vorstehend angegebenen Stand der Technik liegt der vorliegenden Erfindung die Aufgabe zugrunde, ein Verfahren und eine Vorrichtung der eingangs beschriebenen Art anzugeben, mit denen eine Oberflächenhärtung komplexer Bauteilgeometrien im endbearbeiteten Zustand ohne das vorherige Auftragen von absorptionssteigernden Deckschichten möglich ist, mit denen eine im Vergleich zu herkömmlichen Verfahrensweisen erhöhte Prozeßgeschwindigkeit erreicht werden kann und wobei mit vergleichbaren Prozeßparametern die Einhärttiefen gesteigert werden können.

Die vorstehende Aufgabe wird bei einem Vefahren der eingangs beschriebenen Art dadurch gelöst, daß als eine die Absorption erhöhende Maßnahme ein Prozeßgas in Form eines Gasgemischs aus mindestens einem Inertgas und Sauerstoff der Bearbeitungszone zugeführt wird und der Absorptionsgrad der Laserstrahlung in der Bearbeitungszone des Werkstückes in Abhängigkeit des Prozeßgas-Nischungsverhältnisses des Gasgemisches und/oder des Prozeßgasvolumenstroms und/oder der Temperatur in der Bearbeitungszone während der Bearbeitung in Abhängigkeit einer Sollwertvorgabe eingestellt wird.

Bei einer entsprechenden Vorrichtung wird die Aufgabe dadurch gelöst, daß die Prozeßgaszuführeinrichtung ein Gasgemisch aus mindestens einem Inertgas und Sauerstoff zuführt, dessen Mischungsverhältnis und/oder Volumenstrom über eine Gasmischeinrichtung und eine Regeleinrichtung einstellbar ist.

Durch die Zuführung des Prozeßgases aus einem Inertgas-Sauerstoff-Gemisch auf definierte Bereiche des Werkstückes im On-line-Verfahren wird an der Oberfläche der Bearbeitungszone eine definiert gleichmäßige und reproduzierbare Oxidschicht erzeugt und damit der Absorptionsgrad für die Laserstrahlung erhöht. Zur Erzeugung der Oxidschichten wird bei der Festphasenhärtung je nach Anforderungsprofil und Werkstückgeometrie die Prozeßgasmischung, bevorzugt Stickstoff und Sauerstoff, so eingestellt, daß in Abhängigkeit vom Mischungsverhältnis des Gasgemischs und/oder des Prozeßgasvolumensstroms und/oder der Temperatur in der Bearbeitungszone während der Bearbeitung ein Sollwert für die Absorption der Laserstrahlung erreicht wird. Mittels Düsen kann eine solche Prozeßgasmischung sehr definiert auf die zu härtenden Bereiche der Werkstoffoberfläche aufgebracht werden. Die Erzeugung der Oxidschicht erfolgt durch das Prozeßgasgemisch und die Verfahrensparameter, wie beispielsweise die Relativbewegung zwischen Werkstück und Laserstrahl bei gleichzeitiger Temperaturregelung, so daß die Anpassung der Absorption über die Einstellung der Oxidschicht an das Anforderungsprofil erzielt wird. Mit der angegebenen Verfahrensweise werden Oxidschichtdicken von ≤ 1 µm erzielt bei gleichzeitiger Erhöhung des Absorptionsgrades der Laserstrahlung auf bis zu 80%, wobei das gegenüber herkömmlichen Verfahrensweisen zeitaufwendige Aufbringen und Entfernen von Deckschichten entfällt. Mit dem beschriebenen Verfahren läßt sich im Vergleich zur Behandlung ohne die Bildung von Oxidschichten eine Erhöhung der Einhärtetiefen um einen Faktor 3 bis 4 bei ansonsten gleichen Verfahrensparametern, wie beispielsweise der eingesetzten Laserleistung und Vorschubgeschwindigkeit, erzielen. Bei gleicher Einhärtetiefe (ohne und mit Oxidation) sind Prozeßgeschwindigkeiten erreichbar, die um einen Faktor 3 bis 4 höher liegen. Weiterhin ist es mit der erfindungsgemäßen Verfahrensweise möglich, komplexe Bauteilgeometrien zu behandeln, bei denen es praktisch ansonsten unmöglich ist, im endbearbeiteten Zustand des Bauteils absorptionssteigernde Deckschichten vor der Laserstrahlbeaufschlagung aufzubringen. Gerade im Hinblick solcher komplexer Bauteile ist keine Nachbehandlung erforderlich, beispielsweise dahingehend, Reste an Deckschichten zu entfernen, was praktisch an komplexen Bauteilen etwa im Bereich von Hinterschneidungen, wenn überhaupt, nur durch aufwendige Verfahrensweisen möglich ist.

Um die Sollwertvorgabe an veränderte Bedingungen entlang der Bearbeitungszone anpassen zu können, beispielsweise bei Schwankungen der vorgegebenen Werkstückdimensionierung, ist eine Regelung bzw. Einstellung der Sollwertvorgabe entlang der Bearbeitungszone nützlich. Auf diese Weise kann beispielsweise die Sollwertvorgabe nachgeregelt und im On-line-Verfahren den wechselnden Werkstückbedingungen angepaßt werden. Hierbei werden die Istwerte erfaßt, bevorzugt die Temperatur, und diese Istwerte werden mit den Sollwerten verglichen; bei einer Abweichung wird die Differenz nachgeregelt. Die Temperaturerfassung ermöglicht, insbesondere auch in Verbindung mit einem Pyrometer, eine berührungslose Erfassung des Istzustands im Bereich der mit Laserstrahlung beaufschlagten Werkstückoberfläche. Eine solche Temperaturmessung kann auch relativ weit vom Werkstück entfernt vorgenommen werden, um dadurch den Bearbeitungsablauf nicht zu stören. Als weitere Regelgröße kann auch das Mischungsverhältnis des Gasgemisches, d.h. der Anteil des Inertgases und des Sauerstoffes, erfaßt werden, und dieser Istwert mit dem Sollwert verglichen und bei einer Abweichung von dem Sollwert die Differenz nachgeregelt werden. Eine solche Verfahrensweise sollte immer dann bevorzugt angewandt werden, wenn eine sich verändernde Geometrie des Werkstückes vorliegt.

Aufgrund der vorstehend angeführten einzelnen Möglichkeiten, einen Istwert zu erfassen, kann eine individuelle Anpassung des Verfahrens an die Werkstückgemoetrie erzielt werden. Anhand dieser Istwert/Sollwertvergleiche wird bevorzugt bei einer Abweichung die Differenz über eine Änderung der Laserleistung und/oder der Prozeßgeschwindigkeit und/oder der Strahlgeometrie ausgeregelt, bis die Sollwertvorgabe erreicht ist.

Weiterhin ist es von Vorteil, das Gasgemisch unter verschiedenen sich ändernden Winkeln auf die Bearbeitungszonen des Werkstückes zu führen. Hierdurch können beispielsweise, ohne Veränderung der Geometrie der Strahldüse, aus der das Prozeßgas ausströmt, in der Größe unterschiedliche Flächenbereiche auf der Werkstückoberfläche mit dem Prozeßgasgemisch beaufschlagt werden.

Entsprechend den vorstehend beschriebenen Verfahrensweisen zur Erfassung möglicher Istwerte, um diese Istwerte mit Sollwertvorgaben zu vergleichen, werden vorrichtungsgemäß Temperaturmeßeinrichtungen, Durchflußmeßeinrichtungen und Gasmischeinrichtungen vorgesehen, um entsprechende Einstellungen der Verfahrensparameter vornehmen zu können.

Die Gasmischeinrichtung sollte eine oder mehrere Düsen besitzen, die in unterschiedlichen Winkeln auf das Werkstück gerichtet werden. Auch können solche unterschiedlichen Düsen entsprechend der Werkzeuggeometrie betrieben oder von der Gaszufuhr abgetrennt werden, um so unterschiedliche Bereiche mit Prozeßgas zu beaufschlagen. Auch können die Düsen, um die Vorrichtung noch variabler zu gestalten, in ihren Einstellungen veränderbar angeordnet werden, um eine Anordnung zu schaffen, die individuell auf eine neue Werkstückserie oder im On-line-Verfahren auf das momentan bearbeitete Werkstück angepaßt werden kann. Für eine Anpassung im On-line-Verfahren ist eine Stelleinrichtung von Vorteil, die über die Regeleinrichtung angesteuert wird. Darüberhinaus kann eine weitere Anpassung durch unterschiedliche Düsengeometrien oder Düsenfelder bzw. Düsenarrays erfolgen, die relativ zu dem Werkstück jeweils positioniert werden.

Weitere Einzelheiten und Merkmale der Erfindung ergeben sich aus der nachfolgenden Beschreibung eines Ausführungsbeispiels anhand der Zeichnung. In der Zeichnung zeigt
- Fig.1: einen schematischen Aufbau einer Vorrichtung und
- Fig.2: das Ergebnis einer mit dem erfindungsgemäßen Verfahren erzeugten Oxidschicht im Querschliff.

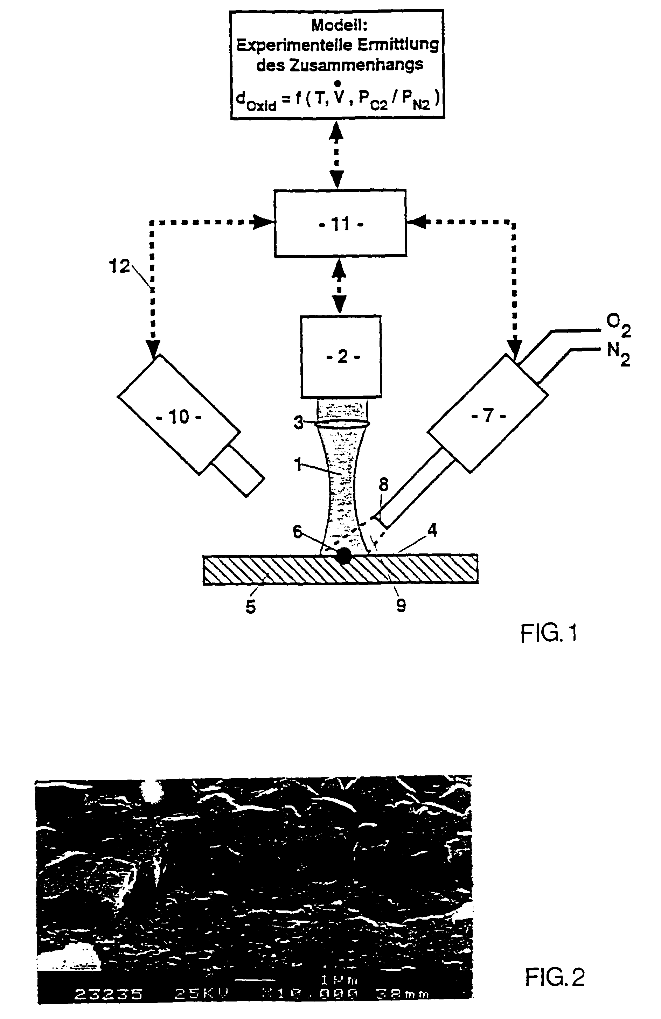

Mit der Anordnung, wie sie in Fig. 1 dargestellt ist, wird kontinuierliche bzw. gepulste Laserstrahlung 1 eines Lasers 2 über eine Fokussieroptik 3 auf die Oberfläche 4 eines Werkstückes 5 geführt. Mit der Fokussieroptik 3 kann eine Anpassung der Strahlbreite an die gewünschte Spurbreite auf der Werkstückoberfläche 4 erfolgen. Es ist anzumerken, daß das Werkstück 5 als ebene Platte in der Fig. 1 dargestellt ist, wobei jedoch die erfindungsgemäße Vorrichtung sowie das erfindungsgemäße Verfahren insbesondere für komplizierte Bauteilgeometrien geeignet sind. Hierfür werden dann noch entsprechende optische Einrichtungen zur Führung der Laserstrahlung in dem Strahlengang der Laserstrahlung 1 eingefügt. Auf die durch die Laserstrahlung beaufschlagte Bearbeitungszone 6 wird ein Gasgemisch aus Sauerstoff (O₂) und Stickstoff (N₂), über einen Gasmischer 7 gemischt aus einer Düse 8 zugeführt. Der Strahlkegel 9, mit dem das Gasgemisch aus Stickstoff und Sauerstoff aus der Düse austritt, kann über eine entsprechende Einrichtung eingestellt werden. Weiterhin kann das Gasgemisch, d.h. das Mischungsverhältnis, von Stickstoff und Sauerstoff, der Gasdruck und die Gasströmung über den Gasmischer 7 eingestellt werden. Auf der Oberfläche des Werkstückes wird eine gleichmäßige Oxidschicht erzeugt, aufgrund derer die Absorption der Laserstrahlung erhöht werden kann. Über ein auf die von der Laserstrahlung beaufschlagten Werkstückoberfläche gerichtetes Pyrometer 10 wird die Temperatur erfaßt, die eine Funktion der absorbierten Laserstrahlung darstellt. Diese Temperatur wird als Istwert einer Regeleinrichtung 11 über eine Leitung 12 eingegeben, in der der Zusammenhang zwischen der "Regelgröße" als Funktion der Temperatur T, des Gasvolumenstroms dV/dt und der Gasmischung PO₂/P_{N2} (Partialdruck) modellmäßig zu berücksichtigen ist. Modellmäßig heißt hierbei, daß zuvor empirische Werte für bestimmte Materialdaten ermittelt wurden, die in der Regeleinrichtung 11 als Festwerte gespeichert sind und in Abhängigkeit der Sollwertvorgaben, mit denen das Verfahren zur Oberflächenhärtung durchgeführt werden soll, abgerufen und zur Ermittlung der Größen der Laserleistung, des Gasvolumenstroms und der Gasmischung berücksichtigt werden, so daß eine Anpassung der Absorption an das Anforderungsprofil erzielt wird. Durch die Anpassung der Absorption ist eine Variation der Einhärttiefe möglich. Durch eine Variation des Gasvolumenstroms und der Gasmischung sowie des Strahlquerschnitts der Laserstrahlung auf der Werkstückoberfläche 4 können weiterhin Oberflächenhärtungen an komplizierten Geometrien, beispielsweise in den Innen- und Außenkantenbereichen eines Werkstückes, variiert werden.

Mit dem vorliegenden Verfahren können Oxidschichtdicken von ≤ 1 µm erzielt werden bei gleichzeitiger Erhöhung des Absorptionsgrades auf bis zu 80%. Die Oberflächenrauhigkeiten der laserstrahlbehandelten Werkstücke liegen dabei in der Größenordnung wie vor der Laserbehandlung, so daß keine Nachbehandlung erforderlich wird.

Das Ergebnis einer mit dem beschriebenen Verfahren erzeugten Oxidschicht ist in Fig. 2 dargestellt (Material: C 60). Die Abbildung zeigt eine mit dem Rasterelektronenmikroskop aufgenommene Probenoberfläche, die nach der Behandlung mit Laserstrahlung gebrochen worden ist. An der Bruchkante ist deutlich die Dicke der Oxidschicht von ~ 1 µm festzustellen.

Typische Verfahrensparameter, mit denen Oxidschichten entsprechend der Fig. 2 erzeugt werden, sind wie folgt:

| | |
|---|---|
| Mittlere Laserleistung am Bearbeitungsort | P_{W} = 350 W |
| Strahldurchmesser am Werkstück | d_{w,u} = 4 mm |
| Vorschubgeschwindigkeit | vᵥ = 150 mm/min |
| Düseninnendurchmesser | d_{D} = 13 mm |
| Gasdurchfluß (Volumenstrom) Stickstoff | V_{N2} = 15 l/min |
| Gasdurchfluß (") Sauerstoff | V_{O2} = 0,12 l/min |
| Oxidschichtdicke | d_{Ox} = 1 µm |

## Patentansprüche

1. Verfahren zur Erhöhung des Absorptionsgrades beim Oberflächen-Festphasenhärten von Werkstücken mittels Laserstrahlung, insbesondere von geometrisch komplizierten Werkstücken, bei dem im Bereich der Bearbeitungszone während des Bearbeitungsprozesses auf dem Werkstück Maßnahmen vorgenommen werden, die die Absorption der Laserstrahlung erhöhen, dadurch gekennzeichnet, daß als eine die Absorption erhöhende Maßnahme ein Prozeßgas in Form eines Gasgemischs aus mindestens einem Inertgas und Sauerstoff der Bearbeitungszone zugeführt wird und der Absorptionsgrad der Laserstrahlung in der Bearbeitungszone des Werkstückes in Abhängigkeit des Prozeßgas-Mischungsverhältnisses des Gasgemisches und/oder des Prozeßgasvolumenstroms und/oder der Temperatur in der Bearbeitungszone während der Bearbeitung in Abhängigkeit einer Sollwertvorgabe eingestellt wird.

2. Verfahren nach Anspruch 1, dadurch gekennzeichnet, daß die Sollwertvorgabe während des Bearbeitungsvorgangs entlang der Bearbeitungszone geregelt wird.

3. Verfahren nach Anspruch 1 oder 2, dadurch gekennzeichnet, daß die Temperatur in der Bearbeitungszone als Istwert erfaßt und dieser Istwert mit dem Sollwert verglichen und bei einer Abweichung die Differenz ausgeregelt wird.

4. Verfahren nach einem der Ansprüche 1 bis 3, dadurch gekennzeichnet, daß der Prozeßgasvolumenstrom als Istwert erfaßt und dieser Istwert mit dem Sollwert verglichen und bei einer Abweichung die Differenz ausgeregelt wird.

5. Verfahren nach einem der Ansprüche 1 bis 4, dadurch gekennzeichnet, daß bei einer Abweichung die Laserleistung und/oder die Prozeßgeschwindigkeit und/oder die Strahlgeometrie angepaßt wird.

6. Verfahren nach einem der Ansprüche 1 bis 5, dadurch gekennzeichnet, daß das Gasgemisch unter verschiedenen Winkeln auf die Bearbeitungszone des Werkstückes zugeführt wird.

7. Verfahren nach einem der Ansprüche 1 bis 6, dadurch gekennzeichnet, daß die Ausbildung der Prozeßgasströmung an die Werkstückgeometrie angepaßt wird.

8. Vorrichtung zur Erhöhung des Absorptionsgrades beim Oberflächen-Festphasenhärten von Werkstücken mittels Laserstrahlung, insbesondere von geometrisch komplizierten Werkstücken, mit einer Prozeßgaszuführeinrichtung, dadurch gekennzeichnet, daß die Prozeßgaszuführeinrichtung (7, 8) ein Gasgemisch aus mindestens einem Inertgas und Sauerstoff zuführt, dessen Mischungsverhältnis und/oder Volumenstrom über eine Gasmischeinrichtung (7) und eine Regeleinrichtung (11) einstellbar ist.

9. Vorrichtung nach Anspruch 8, dadurch gekennzeichnet, daß die Regeleinrichtung (11) über eine Istwertaufnahme Meßwerte über das Mischungsverhältnis des Gasgemischs und/oder des Prozeßgasvolumenstroms und/oder der Temperatur aufnimmt.

10. Vorrichtung nach Anspruch 9, dadurch gekennzeichnet, daß als Istwertaufnahme eine Temperaturmeßeinrichtung vorgesehen ist.

11. Vorrichtung nach einem der Ansprüche 8 bis 10, dadurch gekennzeichnet, daß eine Durchflußmeßeinrichtung vorgesehen ist.

12. Vorrichtung nach einem der Ansprüche 8 bis 11, dadurch gekennzeichnet, daß die Gasmischeinrichtung (7) eine oder mehrere Austritts-Düsen (8) aufweist, über die das Prozeßgas unter verschiedenen Winkeln auf die Bearbeitungszone (6) des Werkstückes (5) ausrichtbar ist.

13. Vorrichtung nach Anspruch 12, dadurch gekennzeichnet, daß die Austritts-Düsen (8) in ihrer Winkeleinstellung zu dem Werkstück (5) veränderbar sind.

14. Vorrichtung nach Anspruch 13, dadurch gekennzeichnet, daß die Änderung der Winkeleinstellung über eine Stelleinrichtung erfolgt, die durch die Regeleinrichtung (11) angesteuert wird.

15. Vorrichtung nach einem der Ansprüche 12 bis 14, dadurch gekennzeichnet, daß die Düsen (8) unterschiedliche Düsengeometrien besitzen.

16. Vorrichtung nach einem der Ansprüche 12 bis 15, dadurch gekennzeichnet, daß ein Düsenfeld bzw. eine Düsen-Array relativ zu dem Werkstück positioniert ist.

## Claims

1. Method for increasing the degree of absorption during solid-phase surface hardening of workpieces, especially of geometrically complicated workpieces, by means of laser radiation, in which measures affecting the workpiece are taken in area of the processing zone during the course of processing to increase the absorption of laser radiation, characterized in that, as an absorption-increasing measure, a process gas in the form of a gas mixture consisting of at least one inert gas and oxygen is supplied to the processing zone, and in that the degree to which the laser radiation is absorbed in the processing zone of the workpiece is adjusted to a nominal value during the course of processing by variation of the mixing ratio of the process gas mixture and/or by varying the volume flow rate of the process gas and/or by varying the temperature in the processing zone.

2. Method according to claim 1, characterized in that, during the course of processing, the specified nominal value is controlled along the processing zone.

3. Method according to claim 1 or claim 2, characterized in that the temperature in the processing zone is detected as an actual value, and in that this actual value is compared with the nominal value, and in that the difference is corrected if there is a deviation.

4. Method according to one of claims 1-3, characterized in that the process gas volume flow rate is detected as an actual value and in that this actual value is compared with the nominal value and in that the difference is corrected if there is a deviation.

5. Method according to one of claims 1-4, characterized in that, if there is a deviation, the laser power and/or the processing speed and/or the beam geometry is adjusted.

6. Method according to one of claims 1-5, characterized in that the gas mixture is supplied at various angles to the processing zone of workpiece.

7. Method according to one of claims 1-6, characterized in that the pattern of the flow of process gas directed at the workpiece is adjusted.

8. Apparatus for increasing the degree of absorption during solid-phase surface hardening of workpieces, especially of geometrically complicated workpieces, by means of laser radiation, with a process gas feed device, characterized in that the process gas feed device (7, 8) supplies a gas mixture consisting of at least one inert gas and oxygen, the mixing ratio and/or volume flow rate of which can be adjusted by way of a gas mixing device (7) and a controller (11).

9. Apparatus according to claim 8, characterized in that the controller (11) accepts, as actual values, measurements of the mixing ratio of the gas mixture and/or of the process gas volume flow rate and/or of the temperature.

10. Apparatus according to claim 9, characterized in that a temperature measuring device is provided to detect actual values.

11. Apparatus according to one of claims 8-10, characterized in that a flowmeter is provided.

12. Apparatus according to one of claims 8-11, characterized in that the gas mixing device (7) has one or more discharge nozzles (8), through which the process gas can be directed at various angles onto the processing zone (6) of the workpiece (5).

13. Apparatus according to claim 12, characterized in that the angular orientation of the discharge nozzles (8) with respect to the workpiece (5) can be changed.

14. Apparatus according to claim 13, characterized in that the change in the angular orientation is accomplished by an adjusting device, which is driven by the automatic controller (11).

15. Apparatus according to one of claims 12-14, characterized in that the nozzles (8) have different nozzle geometries.

16. Apparatus according to one of claims 12-15, characterized in that a nozzle field or a nozzle array is positioned relative to the workpiece.

## Revendications

1. Procédé d'accroissement du degré d'absorption lors de la trempe superficielle en phase solide de pièces par rayonnement laser, en particulier de pièces géométriquement compliquées, pour lequel des mesures, qui accroissent l'absorption du rayonnement laser, sont prises sur la pièce dans la zone d'usinage pendant le processus d'usinage, caractérisé en ce que, comme mesure qui accroît l'absorption, un gaz de processus en forme de mélange gazeux composé d'au moins un gaz inerte et d'oxygène est amené à la zone d'usinage et que le degré d'absorption du rayonnement laser dans la zone d'usinage de la pièce est réglé en fonction du rapport de mélange du gaz de processus du mélange gazeux et/ou du flux de volume du gaz de processus et/ou de la température dans la zone d'usinage pendant l'usinage en fonction d'une valeur de consigne prédéfinie.

2. Procédé selon la revendication 1, caractérisé en ce que la valeur de consigne prédéfinie est réglée pendant le processus d'usinage le long de la zone d'usinage.

3. Procédé selon la revendication 1 ou 2, caractérisé en ce que la température dans la zone d'usinage est enregistrée comme valeur effective et cette valeur effective est comparée à la valeur de consigne et, lors d'un écart, la différence est régulée.

4. Procédé selon l'une des revendications 1 à 3, caractérisé en ce que le flux de volume de gaz de processus est enregistré comme valeur effective et cette valeur effective est comparée à la valeur de consigne et, lors d'un écart, la différence est régulée.

5. Procédé selon l'une des revendications 1 à 4, caractérisé en ce que, lors d'un écart, la puissance du laser et/ou la vitesse du processus et/ou la géométrie du faisceau est adaptée.

6. Procédé selon l'une des revendications 1 à 5, caractérisé en ce que le mélange gazeux est amené sous différents angles à la zone d'usinage de la pièce.

7. Procédé selon l'une des revendications 1 à 6, caractérisé en ce que la configuration de l'écoulement du gaz de processus est adaptée à la géométrie de la pièce.

8. Dispositif d'accroissement du degré d'absorption lors de la trempe superficielle en phase solide de pièces par rayonnement laser, en particulier de pièces géométriquement compliquées, avec un dispositif d'amenée de gaz de processus, caractérisé en ce que le dispositif d'amenée de gaz de processus (7, 8) amène un mélange gazeux composé d'au moins un gaz inerte et d'oxygène dont le rapport de mélange et/ou le flux de volume peut être réglé par un dispositif de mélange de gaz (7) et un dispositif de réglage (11).

9. Dispositif selon la revendication 8, caractérisé en ce que le dispositif de réglage (11) prend, par une prise de valeur effective, des valeurs de mesure sur le rapport de mélange du mélange gazeux et/ou du flux de volume du gaz de processus et/ou de la température.

10. Dispositif selon la revendication 9, caractérisé en ce qu'un dispositif de mesure de la température est prévu comme prise de valeur effective.

11. Dispositif selon l'une des revendications 8 à 10, caractérisé en ce qu'il est prévu un dispositif de mesure du débit.

12. Dispositif selon l'une des revendications 8 à 11, caractérisé en ce que le dispositif de mélange du gaz (7) présente une ou plusieurs tuyères de sortie (8) par lesquelles le gaz de processus peut être orienté sous différents angles sur la zone d'usinage (6) de la pièce (5).

13. Dispositif selon la revendication 12, caractérisé en ce que les tuyères de sortie (9) sont variables quant à leur réglage angulaire par rapport à la pièce (5).

14. Dispositif selon la revendication 13, caractérisé en ce que la variation du réglage angulaire est effectué par un dispositif de réglage qui est excité par le dispositif d'asservissement (11).

15. Dispositif selon l'une des revendications 12 à 14, caractérisé en ce que les tuyères (8) possèdent différentes géométries de tuyères.

16. Dispositif selon l'une des revendications 12 à 15, caractérisé en ce qu'un champ de tuyères ou un arrangement de tuyères est positionné par rapport à la pièce.
